(19) Europäisches Patentamt
European Patent Office
Office européen des brevets

(11) EP 4 716 088 A1

(12) **EUROPEAN PATENT APPLICATION**

(43) Date of publication:
25.03.2026 Bulletin 2026/13

(21) Application number: 24201068.4

(22) Date of filing: 18.09.2024

(51) International Patent Classification (IPC):
*H02P 1/02* (2006.01)   *H02P 21/14* (2016.01)
*H02P 29/024* (2016.01)

(52) Cooperative Patent Classification (CPC):
**H02P 21/141; H02P 1/029; H02P 29/024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **Heikkilä, Joni**
**00380 Helsinki (FI)**
• **Eskola, Matti**
**00380 Helsinki (FI)**
• **Pulli, Tuomas**
**00380 Helsinki (FI)**

(74) Representative: **Kolster Oy Ab**
**Salmisaarenaukio 1**
**P.O. Box 204**
**00181 Helsinki (FI)**

(54) **METHOD FOR CONTROLLING INDUCTION MOTOR AND ELECTRIC POWER CONVERTER**

(57)    A method for controlling an induction motor and an electric power converter, the electric power converter (20) comprising means configured to receive an indication from a second electric power converter (30), the indication indicating that the second electric power converter (30) has stopped controlling an induction motor (60), means configured to determine an estimate of a rotating magnetic flux of the induction motor (60), wherein the determining is at least initiated in response to receiving the indication and means configured to start to control the induction motor (60) by the electric power converter (20) based on the determined estimate of the rotating magnetic flux of the induction motor (60).

FIG. 1

**Description**

TECHNICAL FIELD

The present invention relates to a method for controlling an induction motor and to an electric power converter.

BACKGROUND

A motor drive system comprising two (e.g. a primary and a secondary or redundant) electric power converters may be used to provide a reliable power transmission to a motor, such as an induction motor. During normal operation of the primary electric power converter, the secondary electric power converter may remain unconnected from the induction motor, i.e. the primary electric power converter may be driving the induction motor while the secondary electric power converter may stay idle. When the primary electric power converter stops controlling the induction motor (due to e.g. a failure), the secondary electric power converter may take over the control of the induction motor.

One option to achieve this reliably is to let the rotor of the induction motor to come to a standstill, and then start to control the induction motor with the secondary electric power converter, for example. However, it may take a long time for the induction motor to come to the standstill which may be problematic if the induction motor is used in a time critical application, for instance. Another possible solution is to start to control the induction motor with the secondary electric power converter while the rotor of the induction motor is still rotating. In order to achieve this, the secondary electric power converter may require information on the rotating magnetic flux of the induction motor so that it may synchronize its output parameters with the rotating magnetic flux. However, transmitting such information on the rotating magnetic flux from the primary electric power converter, may be unreliable or even impossible, e.g. in the case where the primary electric power converter is malfunctioning.

BRIEF DESCRIPTION

An object of the present invention is thus to provide a method and an apparatus for implementing the method so as to overcome the above problems or at least to alleviate the problems. The objects of the invention are achieved by a method and an electric power converter which are characterized by what is stated in the independent claims. The preferred embodiments of the invention are disclosed in the dependent claims.

The invention is based on the idea of receiving, in a first electric power converter, an indication from a second electric power converter, the indication indicating that the second electric power converter has stopped controlling an induction motor, and determining, in the first electric power converter, an estimate of a rotating magnetic flux of the induction motor, wherein the determining is at least initiated in response to receiving the indication, and starting to control the induction motor by the first electric power converter based on the determined estimate of the rotating magnetic flux of the induction motor.

An advantage of the solution of the invention is that it can provide a reliable and quick way for switching the control of the induction motor from one electric power converter to another.

BRIEF DESCRIPTION OF THE DRAWINGS

In the following the invention will be described in greater detail by means of preferred embodiments with reference to the attached drawings, in which

> Figure 1 is a block diagram according to an embodiment;
> Figure 2 is a block diagram according to an embodiment; and
> Figure 3 is a signalling diagram according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Different embodiments and examples may be described below using single units, models and equipment, without restricting the embodiments/examples to such a solution. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures, for instance. It should be noted that the use of the embodiments described herein is not limited to devices or systems employing any specific fundamental frequency or any specific voltage level, for example.

The various embodiments described herein are generally applicable to and in connection with various power converter devices and systems thereof. An example of a power converter device (apparatus) is an electric drive, which herein generally refers to an electronic device, which may be used to regulate the performance of an electric motor, for example. An electric drive (AC drive, variable frequency drive, variable speed drive) may control the power, frequency and/or current supplied to the motor, for instance. One or more electric drives and an electric motor controlled by the one or more electric drives may form an electric drive system. An electric drive may comprise one or more electric power converter units or modules, such as rectifiers, inverters and/or frequency converters, for example, which may comprise various power semiconductor devices. Herein term 'inverter' generally refers to an electronic device or circuitry that is able to convert direct current (DC) to alternating current (AC). An example of the inverter is a semiconductor bridge implemented by means of controllable semiconductor switches, such as IGBTs (Insulated-Gate Bipolar Transistor) or FETs (Field-Effect Transistor), which are controlled according to a modulation or control scheme used. The control of an electric motor may be implemented by means of the electric drive in such a manner that the motor implements a desired speed and/or torque instruction, for example. Examples of control methods for electric drives include flux vector control and direct torque control, for example.

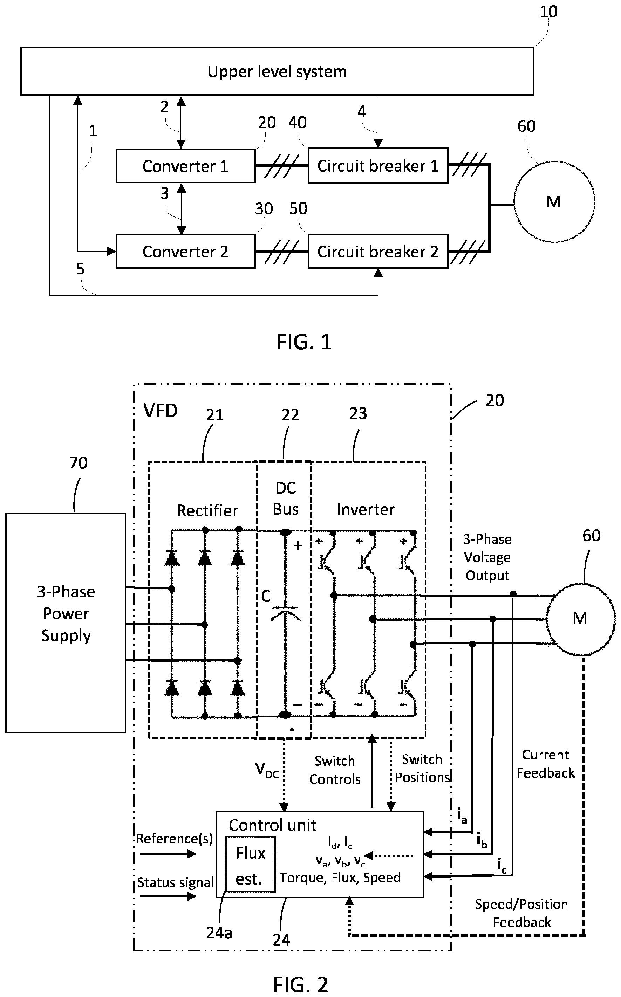

Figure 1 is a simplified block diagram of an exemplary system showing some equipment (e.g. apparatuses, devices, units) and functional entities, whose implementation and/or number and/or configuration may differ from what is shown in the example of Figure 1. Such a system may also comprise other equipment, functional entities and/or structures, some of which may be used in or for data management and communication in the system or in any part of the system, for example. Also e.g. any communication protocols used may vary and may depend on the system characteristics, for instance.

Figure 1 shows an example of an electric power system comprising an upper level system 10, a first electric power converter 20, a second electric power converter 30, a first circuit breaker 40, a second circuit breaker 50 and an (AC) induction motor (asynchronous motor) 60. The possible upper level system may comprise e.g. a supervisory control and data acquisition (SCADA) system, a programmable logic controller (PLC) and/or a distributed control systems (DCS). The first and second electric power converters 20, 30 may comprise e.g. a variable frequency drive (VFD) with a scalar control, a vector control or field-oriented control (FOC), or a direct torque control (DTC) (see below for more detailed description of a possible implementation of the VFD). The first and second circuit breakers 40 and 50 may comprise any circuit breaker which can be externally controlled, for example. Instead of circuit breakers, also other type of switching device(s) could be used. It is also possible that the circuit breaker(s), or other switching devices or generally the corresponding switching functionality, is implemented internally in the first and/or second electric power converter, and not as separate device(s) as shown in the exemplary Figure 1. Although the electric power transmission lines between the first and second electric power converter 20, 30, the first and second circuit breaker 40, 50 and the induction motor 60 are indicated as three phase electric (AC) power transmission lines, more or less phases may be employed. The induction motor 60 may be any kind of single or multi-phase induction motor comprising e.g. a squirrel-cage type or wound type rotor. The connections 1, 2, 3, 4, 5 between the upper level system 10, the first and second electric power converter 20, 30, and the first and second circuit breaker 40, 50, indicate signalling connections and they may be implemented as wired and/or wireless connections, for example. More specifically, such signalling connections may be implemented with any suitable communication technology, e.g. ethernet, serial communication, fieldbus, fiber optic cable, hardwired I/O, wireless LAN, Bluetooth and/or any other suitable communication technology or any combination thereof. Although only one signalling connection is shown the exemplary Figure 1 between any pair of the entities 10, 20, 30, 40, 50, the actual physical connection may comprise more than one signalling connection e.g. for redundancy purposes. At least the signalling connections 1 and 2 between the electric power converters 20, 30 and the upper level system 10 are preferably bi-directional. As an example, the signalling connections 1 and 2 may be used to transmit signals comprising e.g. control commands (e.g. run commands) from the upper level system 10 to the electric power converters 20, 30. Alternatively, or additionally, the signalling connections 1 and 2 may be used to transmit status signals indicating e.g. whether the converter is controlling, and/or has stopped controlling, the induction motor 60, or generally indicating the operating status of the converter, from the electric power converters to the upper level system. Alternatively, or additionally, the signalling connections 1 and 2 may be used to transmit speed and/or torque reference, or any similar control signal(s), from the upper level system to the electric power converters, and/or any other relevant information for controlling the electric power converters, for instance. The signalling connection 3 between the two electric power converters 20 and 30 is preferably bi-directional, or there could be two separate unidirectional connections instead, such that it may be used to carry a signal comprising a status signal of the converter (the status signal indicating e.g. that the converter is controlling the induction motor 60) between the first and second electric power converters 20, 30. The signalling connection 3 may be implemented with any suitable low latency and high reliability communication technology, for example. The signalling connections 4 and 5 may be unidirectional and they may be used to transmit at least signals related to opening and closing commands from the upper level system 10 to the first and second circuit breakers 40, 50. Alternatively, the signalling connections 4 and 5 may be bidirectional in order to allow the first and second circuit breakers 40, 50 to transmit their status (whether open, or closed) to the upper level system 10, for example. As mentioned above, it is also possible that the configuration of the electric power system may differ from what is shown in the exemplary Figure 1.

Figure 2 shows a basic block diagram that illustrates an example where the first electric power converter 20 is implemented as a variable frequency drive (VFD). Generally, the first electric power converter 20 may comprise at least an inverter 23 and a control arrangement (unit, system) 24. Whilst there are a number of variations in variable frequency drive design, they all offer the same basic functionality which is to convert the incoming AC electrical supply of fixed frequency and voltage into a variable frequency and variable voltage that is output to the motor with a corresponding change in the motor speed and torque. The basic design may comprise four elements: a rectifier 21, an intermediate circuit (also referred to as a DC bus) 22, an inverter 23, and a control unit 24. The rectifier 21 converts the incoming alternating current (AC) supply (typically 3-phase mains voltage) into direct current (DC). The rectified DC supply is then conditioned (filtered) in the intermediate circuit 22, normally by a capacitor C or a combination of inductors L and capacitors C, providing a fixed-voltage DC bus. The inverter 23 converts the rectified and conditioned DC back into an AC supply supplied to the induction motor 60. The inverter 23 may comprise six semiconductor switches (such as IGBT switches) switched on and off to connect each motor phase either to the negative or the positive DC bus according to a certain switching sequence or pattern, thereby creating a three phase AC output to the induction motor 60. The control unit 24 controls the operation of the variable frequency drive (VFD), particularly it monitors and controls the switching of the switches of the inverter 23 to deliver the correct output in response to an external control signal, such as speed and/or torque reference. The control unit 24 may comprise one or more microprocessors or digital signal processors (DSP) having associated electronic memory to store program code and data, as well as a communication interface for wireless or wired data communication. The control unit 24 may be programmed and configured to use various control methods to control the switching, such as a scalar control, a vector control or field-oriented control (FOC), and a direct torque control (DTC), some examples of which are briefly described below. However, the implementation of the embodiments described herein is not limited to any such specific control method.

In the scalar control scheme, the frequency (f) and the voltage level (V) of the supplied voltage, or the ratio V/f, can be controlled. The V/f ratio, also referred to as V/Hz ratio or U/f ratio, determines the magnetic flux density. Keeping a constant V/f ratio and thereby constant magnetic flux density, an optimum and constant torque can be obtained for the motor load; that is, as the frequency is reduced from the nominal value, the voltage is reduced in proportion. The control unit 24 may contain a pulse-width-modulator (PWM) to convert voltage and frequency references into the necessary control pulses to drive the switches in the inverter 23. There is no feedback from motor speed in the scalar control, i.e. it is an open-loop control. However, the control unit 24 may be configured to measure one or more of the motor phase currents $i_a$, $i_b$, $i_c$ for other purposes, for example to protect the motor 60 and drive from overload currents, and/or for starting the motor 60 etc..

In the vector control or field-oriented control (FOC) scheme, a stator current vector may be controlled with respect to a flux vector position. That is, the amplitude, frequency, and phase of the AC voltage supply to the motor 60 is controlled to keep the motor speed as desired. The three-phase AC voltage as a phasor is generated to control the three-phase stator current as a phasor, which in turn controls the rotor flux vector and rotor current phasor independently. The vector control can be a closed-loop or open-loop control. A closed-loop vector control requires an encoder feedback that provides motor speed or position measurement to the control unit. In the open-loop vector control (also referred to as sensorless vector control) the control unit 24 may use a mathematical model of the motor operating parameters, rather than using a physical feedback device. The control unit 24 measures the 3-phase currents $i_a$, $i_b$, $i_c$ from the motor 60 and transforms (e.g. by means of Park transformation) the 3-phase currents in a stationary reference frame to a 2-phase flux-producing current component $i_d$ and torque-producing current component $i_q$ with a rotating reference frame. This allows that the torque-producing current $i_q$ can be independently controlled. The control unit 24 compares the measured currents $i_d$ and $i_q$ to reference currents $i_d$ and $i_q$ obtained by the mathematical model and calculates reference voltages for currents $i_d$ and $i_q$. The reference voltages are transformed back into a 3-phase system in a stationary reference. The reference voltages together with the measured DC bus voltage $V_{DC}$ maybe used to calculate the duty cycles for controlling the switching of the semiconductor switches of the inverter to adjust the AC voltage supply to the motor 60 and thereby the motor current. With the sensorless vector control, it is important to have a very accurate mathematical model of the motor, and the controller may be tuned with measurements for proper operation, when it is connected to the motor.

Direct torque control (DTC) scheme controls the flux and torque (and thus finally the speed) of the AC electric motor 60 directly. At least two of the three motor phase currents $i_a$, $i_b$. $i_c$ and the DC bus voltage $V_{DC}$ may be measured, along with switch positions of the inverter 23. Motor voltages $v_a$, $v_b$, $v_c$ can be determined from the DC bus voltage $V_{DC}$ and the switch positions of the inverter 23, for example. The control unit 24 may comprises a mathematical model of the motor 60 that is used to calculate and produce exact values of the stator flux and motor torque, along with shaft speed, based on the measured voltage and currents. The actual torque and flux values are fed to the torque and flux comparators, which compare them to torque and flux reference values that are provided by a speed control loop. Based on the comparison an optimum voltage vector can be chosen based on three parameters: whether torque and stator flux each need to be increased or decreased (or, for torque, held constant), and in which sector (60-degree segment) of the space vector plane the stator flux resides. Based on the chosen voltage vector, the control unit 24 can control the switching of the semiconductor switches of the inverter 23 to maintain or change the motor torque as required.

According to an embodiment, a method comprises receiving, in the first electric power converter 20, an indication from the second electric power converter 30, the indication indicating that the second electric power converter has stopped controlling the induction motor 60. The indication may be received directly or indirectly from the second electric power converter 30, for example. The method further comprises determining, in the first electric power converter 20, an estimate of a rotating magnetic flux of the induction motor 60, wherein the determining is at least initiated in response to receiving the indication. The method further comprises starting to control the induction motor 60 by the first electric power converter 20 based on the determined estimate of the rotating magnetic flux of the induction motor 60. Thus the determined estimate of the rotating magnetic flux of the induction motor 60 may represent an initial value for the rotating magnetic flux used in the control. The rotating magnetic flux may be, or generally represent, a rotor flux or a stator flux of the induction motor 60. In embodiments of the invention, a controller in an electric power converter 20, such as the control unit 24 in the exemplary embodiments illustrated herein, may be configured to perform at least some of the functionality of the embodiments. For example, the control unit 24 may be configured to perform the determining of the estimate of the rotating magnetic flux of the induction motor 60 e.g. by means of a flux estimation sub-unit 24a. The control unit 24 may also determine the rotational speed of the induction motor 60 e.g. by direct measurement (speed/position feedback), or by measurement of the motor currents and voltage. The flux estimation sub-unit 24a may be comprised within the control unit 24, and it may receive as input the status signal from the second electric power converter 30 via the respective signaling connection 3. The flux estimation sub-unit 24a may be configured to determine an estimate of the rotating magnetic flux of the induction motor after receiving the indication that the second electric power converter 30 has stopped controlling the induction motor according to any one of the embodiments described herein. Examples of the determining of the estimate of the rotating magnetic flux are described in more detail below.

According to an embodiment, the indication indicating that the second electric power converter 30 has stopped controlling the induction motor 60 is a predetermined change in a value of a status signal received by the first electric power converter 20 from the second electric power converter 30 and/or a loss of reception of the status signal by the first electric power converter from the second electric power converter. Accordingly, the electric power converters 20, 30 may be configured to send a status signal to each other and/or to the upper level system 10 at least during a time when the electric power converter in question is controlling (and supplying) the induction motor 60. Such a status signal may be implemented in various ways. For example, such a status signal may be implemented as a binary or a multilevel signal. As an example, it is possible that a predetermined value, such as a non-zero or a zero value of such a status signal indicates that the electric power converter in question is controlling the induction motor 60 and another value then indicates that the electric power converter in question is not controlling the induction motor. Alternatively or additionally, it is possible that a presence or existence of such a status signal from the electric power converter 20 or 30 readily indicates that the electric power converter in question is controlling the induction motor 60 and a lack of any such a status signal from the electric power converter 20 or 30 similarly indicates that the electric power converter in question is not controlling the induction motor 60.

According to an embodiment, the determining of the estimate of the rotating magnetic flux of the induction motor comprises determining an estimate for a magnitude of the rotating magnetic flux and determining an estimate for an angle of the rotating magnetic flux. Examples of the determining of the estimate for the magnitude of the rotating magnetic flux and the estimate for the angle of the rotating magnetic flux are described in more detail below.

According to an embodiment, the determining of the estimate for the magnitude of the rotating magnetic flux is based on a model representing a decay of the magnitude of the rotating magnetic flux as a function of time. As mentioned above, e.g. the flux estimation sub-unit 24a in the first electric power converter 20 may start to estimate the rotating magnetic flux of the induction motor 60 after receiving an indication that the second electric power converter 30 has stopped controlling the induction motor 60. As an example, when the second electric power converter 30 stops controlling the induction motor 60, the stator current of the induction motor 60 may be almost immediately forced to zero by the inverter of second electric power converter 30. This occurs as a consequence of all the semiconductor switches of the inverter 23 being turned off (non-conducting state), for instance. Consequently, the rotor flux magnitude (amplitude) may start to slowly decay according to equation:

$$\tau_R \frac{d\Psi_R}{dt}(t) = -\Psi_R(t)$$

where

$\Psi_R$ is the rotor flux magnitude and
$\tau_R$ is a rotor time constant.

The above equation can be used in the first electric power converter 20, e.g. by the flux estimation sub-unit 24a, to determine the estimate of the rotor flux magnitude $\Psi_R$. Further, the above equation can have the following analytical solution assuming that the rotor time constant $\tau_R$ is independent of the rotor flux magnitude $\Psi_R$:

$$\Psi_R(t_2) = \Psi_R(t_1)e^{-\frac{t_2-t_1}{\tau_R}}$$

where

$t_1$ is a time instant when the second power converter 30 stops controlling the induction motor 60 and
$t_2$ is a time instant for which the rotor flux magnitude is determined.

Assuming a low latency signaling connection 3 for carrying the indication, time instant $t_1$ is essentially the same time instant as when the first electric power converter 20, and the flux estimation sub-unit 24a thereof, receives the indication. According to an embodiment, the determining of the estimate for the magnitude of the rotating magnetic flux comprises using a reference value of the magnitude of the rotating magnetic flux as a starting value. In particular, it can be assumed that the rotor flux magnitude at time instant $t_1$ (i.e., $\Psi_R(t_1)$) is close to the reference value set for the rotor flux magnitude that may be a common (predetermined) setting both for the first and second electric power converters 20, 30, for example. Additionally or alternatively, the reference value of the rotor flux magnitude may be received from the upper level system 10. E.g. the flux estimation sub-unit 24a can therefore solve the above model at time instant t2 using the reference value set for the rotor magnetic flux magnitude as $\Psi_R(t_1)$ to determine the estimate for the magnitude of the rotating magnetic flux of the rotor.

According to an embodiment, the determining of the estimate for the angle of the rotating magnetic flux comprises performing, by the first electric power converter, at least one short circuit of terminals of the induction motor. An example is described below. According to an embodiment, at time instant $t_2$ the first electric power converter 20 starts by applying a short circuit to the induction motor 60 terminals and monitors the measured stator current. During the short circuit the stator current changes according to equation:

$$L_\sigma \frac{d\bar{I}_S}{dt}(t) = -R_S\bar{I}_S(t) - \frac{d\bar{\Psi}_R}{dt}(t)$$

where

$\bar{I}_S$ is the stator current vector,
$\bar{\Psi}_R$ is the rotor flux vector,
$L_\sigma$ is the total leakage inductance and
$R_S$ is the stator resistance.

The above equation may have the following analytical solution assuming that the resistive voltage drop is insignificant:

$$L_\sigma\left(\bar{I}_S(t_3) - \bar{I}_S(t_2)\right) = -\left(\bar{\Psi}_R(t_3) - \bar{\Psi}_R(t_2)\right)$$

where

$t_3$ is a time instant when the short circuit ends and the first electric power converter 20 may start to control the induction motor 60.

Assuming that the stator current magnitude is zero when the short circuit starts and that the rotor flux magnitude does not change significantly during the short circuit the solution simplifies to:

$$L_\sigma\bar{I}_S(t_3) \approx -\bar{\Psi}_R(t_3)\left(1 - e^{-j\omega T}\right)$$

where

$\omega$ is a rotor angular frequency and
T is the duration of the short circuit.

Assuming that the duration of the short circuit is rather short and consequently that the change in the rotor angle during the short circuit, i.e. $\omega T$, is rather small the solution simplifies further to:

$$L_\sigma\bar{I}_S(t_3) \approx -j\omega T\bar{\Psi}_R(t_3)$$

Therefore, the rotor flux vector and the stator current vector are approximately perpendicular when the short circuit ends. To determine the rotor flux angle the first electric power converter 20 may also need to know the sign of the rotor angular frequency. This may be assumed to have the same sign as the speed reference that is presently set to the first electric power converter 20. The logic to determine the rotor flux angle $\angle\bar{\Psi}_R(t_3)$ from the stator current angle $\angle\bar{I}_S(t_3)$ can be e.g.:

$$\angle\bar{\Psi}_R(t_3) = \begin{cases} \angle\bar{I}_S(t_3) + \dfrac{\pi}{2}, & \omega \geq 0 \\ \angle\bar{I}_S(t_3) - \dfrac{\pi}{2}, & \omega < 0 \end{cases}$$

That is, by measuring the stator current vector and using the sign of the speed reference, which may be received by the control unit 24 from the upper level system 10, or the sign of a measured rotational speed of the motor 60, the first electric power converter 20, e.g. the flux estimation sub-unit 24a thereof, may determine an estimate for the angle of the rotating rotor magnetic flux. It should be noted that although the above example for determining the estimate for the rotating magnetic flux of the induction motor 60 is explained above in terms of the rotor flux, the stator flux could be used as a basis instead, as the rotor and stator fluxes are interdependent as known per se. Similarly, the determination of the estimate for the rotating magnetic flux of the induction motor 60 may comprise determining an estimate for any other parameter interdependent with the magnitude of the rotating magnetic flux, for example.

An alternative method for determining an estimate for the rotating magnetic flux of the induction motor is described in document US 5521483. The document describes how an initial value of the stator flux $\overline{\Psi}_{s,init}$ (rotating residual flux) can be determined and used as an initial control value when starting to control an induction motor.

According to an embodiment, once the estimate for the rotating magnetic flux of the induction motor has been determined, e.g. as described in the above examples, the estimate for the rotating magnetic flux may be used by the control unit 24 to adjust the output of the first electric power converter 20 (i.e. by adjusting the switching of the switches of the inverter 23) such that the output essentially matches the estimate of the rotating magnetic flux. That is, the estimate of the rotating magnetic flux may be used initially as the reference value of the magnetic flux control when starting to control the induction motor 60 by the first electric power converter 20. After this, if the value of the estimate of the rotating magnetic flux is lower than the reference value of the flux control, the reference value of the magnetic flux control may be increased at a certain rate, preferably proportional to the rotor time constant, to a nominal reference value of the magnetic flux control, wherein the nominal reference value of the magnetic flux control may correspond to the reference value of the magnetic flux valid before or at the time the second electric power converter 30 stopped controlling the induction motor, for example. Additionally, the method may comprise determining, in the first electric power converter 20, the rotational speed of the induction motor 60. The determined rotational speed may then be used when starting to control the induction motor 60 by the first electric power converter 20, e.g. by the speed control in the control unit 24.

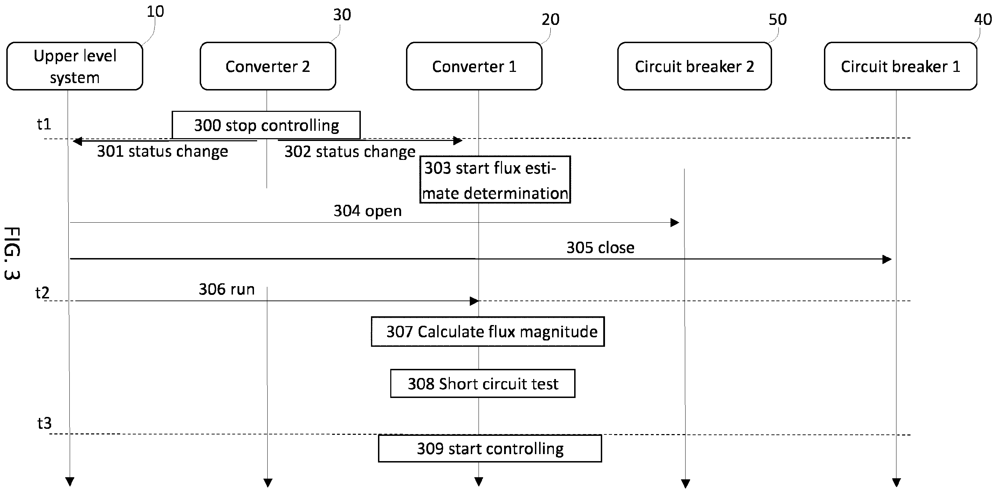

Figure 3 shows an example of controlling the induction motor according to an embodiment. More specifically, Figure 3 shows a signalling diagram including the upper level system 10, the first and second electric power converters 20, 30 and the first and second circuit breakers 40, 50. First, the second electric power 30 converter stops 300 controlling the induction motor. The second electric power converter 30 then transmits 301, 302 at time instant $t_1$ an indication indicating a change in the status, i.e. indicating that the second electric power converter has stopped controlling the induction motor, to the upper level system 10 (indication 301) and to the first electric power converter 20 (indication 302). Upon receiving the indication 302 essentially at time instant $t_1$, the first electric power converter 20 triggers (starts, initiates) the determination 303 of the estimate of of the rotating magnetic flux of the rotor, based on e.g. the above-described model representing the decay of the magnitude of the rotating magnetic flux as a function of time, and uses the pre-configured reference value of the magnitude of the rotor magnetic flux as starting value for the model. Similarly, upon receiving the indication 301 essentially at time instant $t_1$, the upper level system 10 transmits 304 an open (OFF) command to the second circuit breaker 50 and transmits 305 a close (ON) command to the first circuit breaker 40. At time instant $t_2$, the upper level system 10 transmits 306 a run command to the first electric power converter 20. Additionally, the upper level system 10 may transmit information on the reference value for rotation speed of the rotor and/or the reference value of the magnetic flux to the first electric power converter 20. Essentially at the same time instant $t_2$, the first electric power converter 20 calculates 307 the magnitude of the rotating magnetic flux based on a value of the model at time instant $t_2$ and performs 308 the short circuit test to determine the angle of the rotating magnetic flux. Additionally, the first electric power converter 20 may determine the rotational speed of the motor. At time instant $t_3$, the first electric power converter 20 starts 309 to control the induction motor 60 with output parameters determined based on the rotating magnetic flux estimate.

Alternatively, the control of the induction motor may be performed autonomously by the first and second electric power converters 20, 30 without the (any) upper level system 10. In such a case, e.g. the first and second circuit breakers 40, 50 (or other possible switching devices) may be suitably controlled directly by the first and second electric power converters 20, 30. In this case it is possible that e.g. each electric power converter controls only the circuit breaker connected to it via the electric power transmission line (i.e. first electric power converter 20 controls the first circuit breaker 40 etc.) or that e.g. each circuit breaker can be controlled by either one of the electric power converters, i.e. that the first and second electric power converter 20, 30 both can control both circuit breakers 40, 50. The latter option may be beneficial in a case where the second electric power converter 30 stops controlling the induction motor 60 due to e.g. a hardware failure. Furthermore, in this alternative, the first electric power converter 20 may determine to calculate 307 the magnitude of the rotating magnetic flux of the rotor and perform 308 the short circuit test e.g. after a pre-configured time has passed from the receiving of the indication 302 indicating that the second electric power converter has stopped controlling the induction motor from the second electric power converter. Alternatively, the first electric power converter 20 may determine to calculate 307 the magnitude of the rotating magnetic flux and perform 308 the short circuit test in response to the second circuit breaker 50 being opened and the first circuit breaker 40 being closed, for example.

In an alternative embodiment, the roles of the first and second electric power converters 20, 30 may be interchanged. That is, it may be the first electric power converter which stops controlling the induction motor 60 and transmits an indication indicating it has stopped controlling the induction motor to the second electric power converter 30. The second electric power converter 30 may then perform the method for determining the estimate of the rotating rotor magnetic flux and start controlling the induction motor based on the estimate.

The use of the invention according to any of the above embodiments may be beneficial in applications requiring continuous operation such as, but not limited to, controlling an induction motor driving a flue gas fan. Due to the critical nature of flue gas fans for controlling exhaust gases, any downtime of induction motor operation caused by electric power converter failure could lead to serious operational and environmental issues. The use of the invention according to any of the above embodiments in such application can be beneficial, since it can provide a reliable and quick way for switching the control of the induction motor from one electric power converter to another in case latter stops controlling the induction motor, for example. However, this is merely an illustrative example, and the invention according to any of the above embodiments is not limited to use in applications requiring continuous operation.

The control arrangement 24, or generally control means, implementing at least part of the control functionality according to any one of the above embodiments, or any combination thereof, may be implemented as one unit or as two or more separate physical units that are configured to implement the functionality of the various embodiments. Herein the term 'unit' generally refers to a physical or logical entity, such as a physical device or a part thereof or a software routine. The control arrangement according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the various embodiments, or a part thereof, may further comprise suitable input means for receiving e.g. measurement and/or control data, and output means for outputting e.g. control or any other data. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

Many electric devices, such as electric power converters, and components thereof may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the control arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 3 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

## Claims

1. A method for controlling an induction motor, the method comprising:

    receiving, in a first electric power converter, an indication from a second electric power converter, the indication indicating that the second electric power converter has stopped controlling the induction motor;
    determining, in the first electric power converter, an estimate of a rotating magnetic flux of the induction motor, wherein the determining is at least initiated in response to receiving the indication; and
    starting to control the induction motor by the first electric power converter based on the determined estimate of the rotating magnetic flux of the induction motor.

2. The method of claim 1, wherein the indication indicating that the second electric power converter has stopped controlling the induction motor is a predetermined change in a value of a status signal received by the first electric power converter from the second electric power converter and/or a loss of reception of the status signal by the first electric power converter from the second electric power converter.

3. The method of any one of the previous claims, wherein the determining of the estimate of the rotating magnetic flux of the induction motor comprises:

    determining an estimate for a magnitude of the rotating magnetic flux; and
    determining an estimate for an angle of the rotating magnetic flux.

4. The method of claim 3, wherein the determining of the estimate for the magnitude of the rotating magnetic flux is based on a model representing a decay of the magnitude of the rotating magnetic flux as a function of time.

5. The method of claim 4, wherein the determining of the estimate for the magnitude of the rotating magnetic flux comprises using a reference value of the magnitude of the rotating magnetic flux as a starting value.

6. The method of any one of claims 3 to 5, wherein the determining of the estimate for the angle of the rotating magnetic flux comprises performing, by the first electric power converter, at least one short circuit of terminals of the induction motor.

7. The method of any one of claims 1 to 6, wherein the rotating magnetic flux is a rotor flux or a stator flux of the induction motor.

8. The method of any one of claims 1 to 7, further comprising determining, in the first electric power converter, a rotational speed of the induction motor.

9. A computer program product comprising program instructions which, when run by a computing apparatus controlling an electric power converter, cause the computing apparatus to carry out a method according to any one of claims 1 to 8.

10. An electric power converter, the electric power converter comprising:

    means configured to receive an indication from a second electric power converter, the indication indicating that the second electric power converter has stopped controlling an induction motor;
    means configured to determine an estimate of a rotating magnetic flux of the induction motor, wherein the determining is at least initiated in response to receiving the indication; and
    means configured to start to control the induction motor by the electric power converter based on the determined estimate of the rotating magnetic flux of the induction motor.

11. The electric power converter of claim 10, wherein the indication indicating that the second electric power converter has stopped controlling the induction motor is a predetermined change in a value of a status signal received in the electric power converter from the second electric power converter and/or a loss of reception of the status signal in the electric power converter from the second electric power converter.

12. The electric power converter of claim 10 or 11, wherein the means configured to determine the estimate of the rotating magnetic flux of the induction motor further comprise:

    means configured to determine an estimate for a magnitude of the rotating magnetic flux; and
    means configured to determine an estimate for an angle of the rotating magnetic flux.

13. The electric power converter of claim 12, wherein the means configured to determine the estimate for the magnitude of the rotating magnetic flux are configured to determine the estimate for the magnitude of the rotating magnetic flux based on a model representing a decay of the magnitude of the rotating magnetic flux as a function of time by using a reference value of the magnitude of the rotating magnetic flux as a starting value.

**14.** The electric power converter of claim 12 or 13, wherein the means configured to determine the estimate for the angle of the rotating magnetic flux further comprise means to perform at least one short circuit of terminals of the induction motor.

**15.** The electric power converter of any one of claims 10 to 14, further comprising means configured to transmit an indication indicating that the electric power converter has stopped controlling the induction motor.

FIG. 1

FIG. 2

FIG. 3

**EUROPEAN SEARCH REPORT**

Application Number

EP 24 20 1068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/265832 A1 (TAN DAISUKE [JP] ET AL) 30 October 2008 (2008-10-30) * the whole document * ----- | 1-15 | INV. H02P1/02 H02P21/14 H02P29/024 |
| A | MOSADDEGH HAMIDREZA ET AL: "A Comprehensive Review of Restarting Strategies for Free Running Induction Motor Drives", 2024 INTERNATIONAL CONFERENCE ON ELECTRICAL MACHINES (ICEM), IEEE, 1 September 2024 (2024-09-01), pages 1-6, XP034722889, DOI: 10.1109/ICEM60801.2024.10700456 [retrieved on 2024-10-09] * the whole document * ----- | 1-15 | |
| A | JP 2007 014198 A (INT RECTIFIER CORP) 18 January 2007 (2007-01-18) * the whole document * ----- | 1-15 | TECHNICAL FIELDS SEARCHED (IPC) H02P |

The present search report has been drawn up for all claims

| Place of search | Date of completion of the search | Examiner |
|---|---|---|
| Munich | 4 February 2025 | Wimböck, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1068

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| US 2008265832 A1 | 30-10-2008 | CA 2629827 A1 | 24-10-2008 |
| | | JP 5152742 B2 | 27-02-2013 |
| | | JP 2008271751 A | 06-11-2008 |
| | | US 2008265832 A1 | 30-10-2008 |
| JP 2007014198 A | 18-01-2007 | DE 102006030362 A1 | 11-01-2007 |
| | | JP 2007014198 A | 18-01-2007 |
| | | KR 20070003708 A | 05-01-2007 |
| | | US 2007001635 A1 | 04-01-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5521483 A